(19) Europäisches Patentamt / European Patent Office / Office européen des brevets

(11) **EP 4 160 079 B1**

(12) **FASCICULE DE BREVET EUROPEEN**

(45) Date de publication et mention de la délivrance du brevet:
**08.11.2023 Bulletin 2023/45**

(21) Numéro de dépôt: **22196785.4**

(22) Date de dépôt: **21.09.2022**

(51) Classification Internationale des Brevets (IPC):
**F17C 13/02** $^{(2006.01)}$

(52) Classification Coopérative des Brevets (CPC):
**F17C 13/02;** F17C 2201/0157; F17C 2201/052;
F17C 2205/0332; F17C 2221/033;
F17C 2223/0161; F17C 2223/033; F17C 2250/032;
F17C 2250/0408; F17C 2250/0413;
F17C 2250/0417; F17C 2250/0426;
F17C 2250/043; F17C 2250/0439;
F17C 2250/0443; (Cont.)

(54) **PROCÉDÉ ET SYSTÈME POUR CALCULER UN PARAMÈTRE DE TRANSITION D'UN MOYEN DE STOCKAGE POUR UN GAZ LIQUÉFIÉ**

VERFAHREN UND SYSTEM ZUR BERECHNUNG EINES ÜBERGANGSPARAMETERS EINES SPEICHERMEDIUMS FÜR VERFLÜSSIGTES GAS

METHOD AND SYSTEM FOR CALCULATING A TRANSITION PARAMETER OF A LIQUEFIED GAS STORAGE MEDIUM.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2021 FR 2110369**

(43) Date de publication de la demande:
**05.04.2023 Bulletin 2023/14**

(73) Titulaire: **GAZTRANSPORT ET TECHNIGAZ**
**78470 Saint-Rémy-lès-Chevreuse (FR)**

(72) Inventeur: **BONNISSEL, Marc**
**78470 SAINT-REMY-LES-CHEVREUSE (FR)**

(74) Mandataire: **Loyer & Abello**
**9, rue Anatole de la Forge**
**75017 Paris (FR)**

(56) Documents cités:
**EP-B1- 3 390 893      DE-A1-102016 216 525**
**US-A1- 2019 226 640**

(52) Classification Coopérative des Brevets (CPC):
(Cont.)
F17C 2250/0452; F17C 2250/0473;
F17C 2250/0491; F17C 2250/0636;
F17C 2250/0673; F17C 2250/0694; F17C 2260/02;
F17C 2260/021; F17C 2265/066; F17C 2270/0105;
Y02E 60/32

## Description

### Domaine technique

L'invention se rapporte à un procédé et un système pour calculer un paramètre de transition d'un moyen de stockage de gaz liquéfié. Plus particulièrement, le paramètre de transition caractérise un processus thermodynamique d'un mélange biphasique de gaz liquéfié et de sa vapeur contenu dans une ou plusieurs cuves étanches et non réfrigérées.

### Arrière-plan technologique

Un gaz liquéfié est un gaz aux conditions normales de température et de pression rendu liquide par refroidissement ou compression.

Des cuves étanches, thermiquement isolées et non réfrigérées sont couramment utilisées pour le transport de gaz liquéfiés à basse température, tels les gaz de pétrole liquéfiés (aussi appelé « GPL ») transporté à une température comprise entre - 50°C et 0°C, l'hydrogène liquide (aussi désigné « LH2 ») transporté à une température de -253°C, ou encore le gaz naturel liquéfié (ci-après appelé « GNL ») transporté à une température de - 162°C. Ces cuves peuvent également être destinées au stockage de gaz liquéfié servant de carburant pour la propulsion d'un véhicule terrestre, maritime ou aérien.

Une cuve contenant un gaz liquéfié refroidi à basse température se présente comme un mélange biphasique de liquide - le gaz liquéfié - surplombé par sa vapeur - le « ciel gazeux ».

Durant le transport ou sur la période de stockage du gaz liquéfié, la cuve peut être soumise à des variations de pression. Les infiltrations de chaleur à travers les parois de la cuve provoquent l'évaporation du gaz liquéfié et une augmentation de la pression dans le ciel gazeux. À l'inverse, les soutirages de vapeur, par exemple pour alimenter le moteur d'un véhicule propulsé au gaz liquéfié, entraînent une diminution de la pression dans le ciel gazeux.

Une pression trop basse risque cependant d'entraîner une déformation ou un décollement de la membrane d'étanchéité de la cuve (effondrement ou « collapsing »). Une pression trop haute risque à son tour d'entraîner une détérioration de la membrane d'étanchéité, voire d'endommager la cuve elle-même. Or l'intégrité structurelle de la membrane et de la cuve contenant un gaz liquéfié est particulièrement importante compte tenu de la nature inflammable ou explosive du liquide transporté ou stocké, telle GNL.

Afin de se prémunir des effets dommageables des surpressions ou dépressions, les cuves sont équipées de soupapes de sûreté qui s'ouvrent automatiquement au-delà de leur pression de tarage, et de soupapes casse-vide qui s'ouvrent automatiquement endeça de leur pression de tarage.

Pour contrôler les variations de pression au sein de la cuve dans la fourchette des pressions de tarage des soupapes casse-vide et des soupapes de sûreté, un opérateur peut décider de réaliser des soutirages de liquide ou de vapeur.

Pour limiter l'augmentation de la pression au sein de la cuve, le gaz d'évaporation peut, sur décision de l'opérateur, être brûlé ou mis à l'évent, si les conditions réglementaires le permettent. Dans d'autres circonstances, lorsque le moteur d'un véhicule propulsé au gaz liquéfié est alimenté par des soutirages de vapeur, l'opérateur peut limiter la diminution de la pression au sein de la cuve en préférant des soutirages de liquide, dont la vaporisation forcée permet de suppléer l'alimentation moteur.

Le brevet EP 3 390 893 décrit un procédé et un système pour calculer en temps réel, selon une méthode itérative, la durée de la montée en pression d'une cuve non réfrigérée contenant du GNL jusqu'à la pression de tarage des soupes de sûreté.

### Résumé

Il est souhaitable de disposer d'une grande marge de manoeuvre opératoire au cours du transport ou du stockage du gaz liquéfié, et donc gagner en flexibilité dans la chaîne logistique. Ainsi, un objectif à la base de certains aspects de l'invention est de pouvoir calculer, en temps réel ou à l'avance, des paramètres de transition - durée d'une variation de pression, débit de soutirage de liquide ou débit de soutirage de vapeur - caractérisant le comportement thermodynamique du gaz liquéfié contenu dans la cuve étanche et non réfrigérée. Ces informations constituent un outil d'aide à la décision et d'optimisation pour l'opérateur, lui permettant notamment d'élaborer des scenarii de gestion pour minimiser les pertes par évaporation durant le transport ou au cours du stockage du gaz liquéfié.

Une idée à la base de l'invention est de calculer directement un paramètre de transition caractérisant un processus thermodynamique d'un mélange biphasique de gaz liquéfié et de sa vapeur, contenu dans une ou plusieurs cuves étanches et non réfrigérées, en effectuant un bilan de masse et un bilan d'énergie entre un état initial et un état final spécifié par l'opérateur.

Selon un mode de réalisation, l'invention fournit un procédé mis en oeuvre par ordinateur pour calculer un paramètre de transition d'un moyen de stockage pour un gaz liquéfié, le moyen de stockage comportant au moins une cuve étanche et non réfrigérée, le paramètre de transition caractérisant une évolution d'un mélange biphasique contenu dans la cuve étanche et non réfrigérée entre un état initial et un état final, le mélange biphasique incluant une phase liquide et une phase vapeur, ledit paramètre de transition pouvant être une durée de la transition $\tau$, un débit de soutirage de liquide $\dot{m}_l$ ou un débit de soutirage vapeur $\dot{m}_v$. Le procédé comporte les étapes consistant à :

- déterminer, pour la phase liquide et la phase vapeur dans l'état initial, des masses volumiques initiales $\rho_{l,i}$ et $\rho_{v,i}$, et des énergies internes massiques initiales $U_{l,i}$ et $U_{v,i}$ à partir d'une température initiale de la phase liquide $T_{l,i}$, d'une température initiale de la phase vapeur $T_{v,i}$, d'une pression initiale de la phase vapeur $P_i$, d'un volume initial de la phase liquide $V_{l,i}$ et d'une composition initiale de la phase liquide $x_{l,i}$,
- déterminer, pour la phase liquide et la phase vapeur dans l'état final, des masses volumiques finales $\rho_{l,f}$ et $\rho_{v,f}$, des énergies internes massiques finales $U_{l,f}$ et $U_{v,f}$, et des enthalpies massiques finales $H_{l,f}$ et $H_{v,f}$ à partir d'une équation d'état et d'une pression finale de la phase vapeur $P_f$,
- calculer le paramètre de transition à l'aide de l'équation

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

dans laquelle $\dot{Q}$ correspond à une énergie apportée par les infiltrations de chaleur à travers les parois d'une cuve par unité de temps, $V_t$ correspond à un volume total de la cuve et avec

$$\overline{U} = \frac{\rho_{l,f}U_{l,f} - \rho_{v,f}U_{v,f}}{\rho_{l,f} - \rho_{v,f}}.$$

La masse et l'énergie étant des propriétés extensives, les équations de conservation de la masse et de l'énergie en multicuves s'identifient à la somme de ces mêmes équations considérées pour chaque cuve. Ainsi, selon un autre mode de réalisation, le moyen de stockage comporte une pluralité de cuves et, pour la phase liquide et la phase vapeur, les masses volumiques initiales et finales, les énergies internes massiques initiales et finales et les enthalpies massiques finales sont déterminées pour chaque cuve, et le paramètre de transition est calculé à l'aide de l'équation

$$\tau\left(\dot{Q}_j + \sum \dot{m}_{v,f,j}\left(H_{v,f,j} - \overline{U}_j\right) + \sum \dot{m}_{l,j}\left(H_{l,f,j} - \overline{U}_j\right)\right)$$
$$= \sum \rho_{l,i,j}V_{l,i,j}\left(\overline{U}_j - U_{l,i,j}\right) + \sum \rho_{v,i,j}\left(V_{t,j} - V_{l,i,j}\right)\left(\overline{U}_j - U_{v,i,j}\right)$$
$$+ \sum \rho_{v,f,j}V_{t,j}\left(U_{v,f,j} - \overline{U}_j\right)$$

l'exposant j renvoyant à l'index de la cuve considérée.

Selon un mode de réalisation particulier, le paramètre de transition est la durée de transition $\tau$, le débit de soutirage de vapeur $\dot{m}_v$ et le débit de soutirage de liquide $\dot{m}_l$ étant prédéterminés.

Selon une variante, le paramètre de transition est le débit de soutirage de vapeur $\dot{m}_v$, le débit de soutirage de liquide $\dot{m}_l$ et la durée de la transition r étant prédéterminés.

Selon une autre variante, le paramètre de transition est le débit de soutirage de liquide $\dot{m}_l$, la durée de la transition $\tau$ et le débit de soutirage de vapeur $\dot{m}_v$ étant prédéterminés.

Selon un exemple de réalisation particulier, le moyen de stockage comporte au moins un capteur de niveau configuré pour déterminer le volume de la phase liquide dans au moins une cuve étanche et non réfrigérée et le volume initial de la phase liquide $V_{l,i}$ est déterminé par le capteur de niveau.

Selon un exemple de réalisation particulier, le moyen de stockage comporte au moins un capteur de température configuré pour mesurer la température de la phase vapeur et au moins un capteur de température configuré pour mesurer la température de la phase liquide dans au moins une cuve étanche et non réfrigérée, et la température initiale de la phase vapeur $T_{v,i}$ et la température initiale de la phase liquide $T_{l,i}$ sont mesurées par les capteurs de température.

Selon un exemple de réalisation particulier, le moyen de stockage comporte au moins un capteur de pression configuré pour mesurer la pression de la phase vapeur dans au moins une cuve étanche et non réfrigérée, et la pression initiale de la phase vapeur $P_i$ est mesurée par le capteur de pression.

Selon un exemple de réalisation particulier, le moyen de stockage comporte au moins un capteur de composition configuré pour déterminer la composition de la phase liquide dans au moins une cuve étanche et non réfrigérée et la composition initiale de la phase liquide $x_{l,i}$ est déterminée par le capteur de composition.

Selon un exemple de réalisation particulier, le moyen de stockage comporte un capteur de débit configuré pour mesurer un débit massique de soutirage de liquide ou de vapeur au sortir d'une cuve étanche et non réfrigérée, et le débit massique de soutirage de liquide $\dot{m}_l$ ou le débit massique de soutirage de vapeur $\dot{m}_v$ est déterminé par le capteur de débit.

Selon un mode de réalisation, le moyen de stockage comporte au moins une cuve étanche et non réfrigérée équipée d'une soupape de sûreté et la pression finale de la phase vapeur $P_f$ est inférieure ou égale à la pression de tarage de la soupape de sûreté et supérieure ou égale à la pression initiale de la phase vapeur $P_i$.

Selon un autre mode de réalisation, le moyen de stockage comporte au moins une cuve étanche et non réfrigérée équipée d'une soupape casse-vide et la pression finale de la phase vapeur $P_f$ est supérieure ou égale à la pression de tarage de la soupape casse-vide et inférieure ou égale à la pression initiale de la phase vapeur $P_i$.

Selon un exemple de réalisation particulier, le mélange biphasique est un mélange combustible.

Selon un autre exemple de réalisation particulier, le mélange biphasique est du gaz naturel liquéfié. Selon d'autres exemples, le mélange biphasique peut être du gaz de pétrole liquéfié ou du dihydrogène liquéfié.

Selon un exemple de réalisation particulier, la cuve étanche et non réfrigérée est un réservoir de carburant pour la propulsion d'un véhicule terrestre, maritime, aérien ou spatial.

Selon un autre exemple de réalisation particulier, le véhicule maritime est un méthanier ou un navire propulsé au gaz naturel liquéfié.

Selon des modes de réalisation, l'invention fournit également un support lisible par ordinateur non transitoire comportant des instructions de programme qui, lorsqu'elles sont exécutées par un appareil, amènent l'appareil à exécuter les méthodes susmentionnées. L'appareil peut être un ordinateur ou un matériel informatique similaire.

Selon un mode de réalisation, l'invention fournit aussi un système pour calculer un paramètre de transition d'un moyen de stockage pour un gaz liquéfié caractérisant une évolution d'un mélange biphasique entre un état initial et un état final, le paramètre de transition pouvant être une durée de la transition $\tau$, un débit de soutirage de liquide $\dot{m}_l$ ou un débit de soutirage vapeur $\dot{m}_v$. Le système comporte un moyen de stockage comportant au moins une cuve étanche et non réfrigérée contenant le mélange biphasique, ledit mélange biphasique incluant une phase liquide et une phase vapeur, un dispositif de calcul configuré pour mettre en oeuvre un des procédés tels que précédemment décrits, et une interface homme-machine interagissant avec le dispositif de calcul pour communiquer à un opérateur le paramètre de transition calculé.

Selon un mode de réalisation, l'invention fournit aussi un véhicule terrestre, maritime ou aérien comportant un réservoir de carburant pour la propulsion du véhicule et un système précité configuré pour calculer un paramètre de transition du réservoir de carburant.

## Brève description des figures

L'invention sera mieux comprise, et d'autres buts, détails, caractéristiques et avantages de celle-ci apparaîtront plus clairement au cours de la description ci-après de plusieurs modes de réalisation particuliers de l'invention, donnés uniquement à titre illustratif et non limitatif, en référence aux dessins annexés.

[Fig. 1] est une représentation schématique d'un navire propulsé au gaz liquéfié.

[Fig. 2] est une représentation schématique en coupe d'un navire de transport de gaz liquéfié.

[Fig. 3] est un organigramme représentant un procédé pour calculer un paramètre de transition selon un mode de réalisation de l'invention.

[Fig. 4] est une vue schématique en coupe d'un système de stockage de gaz liquéfié dans lequel le procédé de la Fig. 3 peut être mis en oeuvre.

[Fig. 5] schématise une interface pouvant être utilisée pour communiquer à l'opérateur des données d'entrées spécifiques au système de stockage et/ou un paramètre de transition.

## Description des modes de réalisation

Les modes de réalisation ci-après sont décrits en relation avec un véhicule maritime motorisé - méthanier ou navire propulsé au gaz liquéfié - comportant au moins une cuve étanche et non réfrigérée servant au transport du gaz liquéfié ou servant de réservoir pour alimenter en gaz liquéfié le ou les moteurs du véhicule.

La forme générale d'une cuve étanche et non réfrigérée peut être de différents types : des géométries polyédriques (par exemple prismatiques), cylindriques, sphériques ou autres sont possibles. La cuve non réfrigérée peut être à membrane d'étanchéité simple ou double. Les membranes d'étanchéité sont généralement réalisées en fine feuille d'acier inoxydable ou en Invar. Une membrane primaire est généralement en contact direct avec le gaz liquéfié à très basse température.

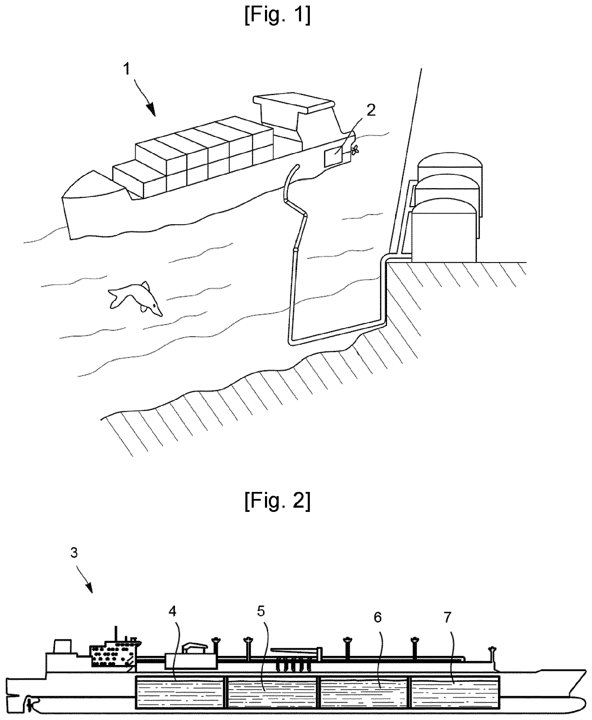

La figure 1 illustre un navire propulsé au gaz liquéfié 1 comportant une cuve étanche non réfrigérée 2 servant de réservoir pour stocker le gaz liquéfié destiné à l'alimentation de ses moteurs.

La figure 2 illustre un navire de transport de gaz liquéfié ou méthanier 3 comportant quatre cuves étanches et non réfrigérées 4, 5, 6 et 7.

Il est connu que les infiltrations de chaleur à travers les parois d'une cuve étanche et non réfrigérée provoquent une élévation de la température au sein de la cuve, à l'origine du phénomène d'évaporation du gaz liquéfié qu'elle contient et, corrélativement, d'une augmentation de la pression dans le ciel gazeux.

Dans les méthaniers ou les navires propulsés au GNL, le gaz évaporé (« Boil-Off Gaz », abrégé BOG) peut être utilisé pour alimenter les moteurs principaux, qui propulsent le navire, et les moteurs auxiliaires, qui génèrent de l'électricité à bord. Dans le cas où le débit de gaz évaporé est supérieur à la consommation des moteurs, l'excédent est orienté vers une ou deux chaudières, voire si les conditions réglementaires le permettent, mis à l'évent, pour juguler la surpression provoquée par l'évaporation. Inversement, lorsque le débit de gaz évaporé est inférieur à la consommation des moteurs, des soutirages de GNL peuvent être réalisés. L'évaporation forcée du gaz liquéfié soutiré (« Forcing Boil-Off Gas », abrégé FBOG) permet alors de combler la différence de débits entre l'évaporation naturelle et la consommation des moteurs, ce qui limite la dépression du ciel gazeux contenu dans la cuve 2, 4, 5, 6 ou 7.

Pour éviter des pertes sèches en brûlant ou en mettant à l'évent l'excès de gaz évaporé en cas de surpression, l'opérateur doit pouvoir connaître, à l'avance ou en temps réel, les paramètres de transition - durée de la variation de pression $\tau$, le débit de soutirage de vapeur $\dot{m}_v$ et le débit de soutirage de liquide $\dot{m}_l$ - qui caractérisent le comportement thermodynamique du GNL contenu dans la cuve étanche et non réfrigérée 2, 4, 5, 6 ou 7.

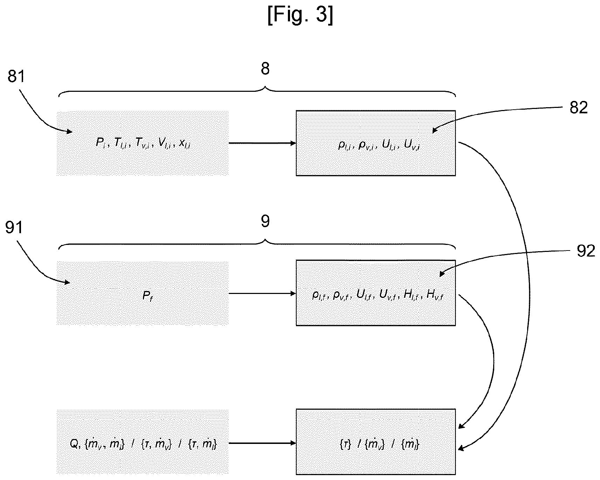

La figure 3 est un organigramme représentant un procédé pour calculer un paramètre de transition. Le paramètre de transition caractérise une évolution thermodynamique, entre un état initial 8 et un état final 9, d'un mélange biphasique de gaz liquéfié et de vapeur contenu dans une cuve étanche et non réfrigérée 2, 4, 5, 6 ou 7. À un instant donné, l'état thermodynamique du mélange biphasique est décrit par un jeu de variables d'état qui caractérisent ses propriétés physiques macroscopiques. L'état initial 8 correspond soit à un état thermodynamique du mélange biphasique spécifié par l'opérateur, soit à l'état thermodynamique du mélange biphasique à l'instant où le procédé pour calculer le paramètre de transition est enclenché. L'état final 9 correspond à un état thermodynamique du mélange biphasique spécifié par l'opérateur.

Selon un premier mode de réalisation, connaissant les températures, pressions, volumes et compositions du gaz liquéfié et de sa vapeur, dans l'état initial 8 et dans l'état final 9, toutes les propriétés physiques du mélange biphasique (masses volumiques, énergies internes et enthalpies) peuvent être déterminées.

Dans l'état initial 8, pour la phase liquide et la phase vapeur, les données calculées 82, à savoir les masses volumiques $\rho_{l,i}$ et $\rho_{v,i}$ et les énergies internes massiques $U_{l,i}$ et $U_{v,i}$, sont déterminées à partir des données d'entrées 81, soit de la température de la phase liquide $T_{l,i}$, de la température de la phase vapeur $T_{v,i}$, de la pression de la phase vapeur $P_i$, du volume de la phase liquide $V_{l,i}$ et de la composition de la phase liquide $x_{l,i}$. Les températures, pression et volume peuvent être mesurés par des capteurs ou spécifiés par l'opérateur. La composition du gaz liquéfié $x_{l,i}$ fixe la composition de sa vapeur $x_{v,i}$. En particulier, si le gaz liquéfié est du GNL, sa composition $x_{l,i}$ est précisée dans le certificat de qualité et le connaissement remis lors du chargement dans la cuve étanche et non réfrigérée 2, 4, 5, 6 ou 7, ou mesurée à l'aide d'un capteur de composition, ou encore pré-calculée à l'aide d'un modèle dit « de vieillissement » du GNL.

Dans l'état final 9, l'opérateur spécifie la donnée d'entrée 91, soit la pression de la phase vapeur $P_f$. Le mélange biphasique est supposé à l'équilibre thermodynamique et le gaz liquéfié est supposé à son point de bulle. Selon ces hypothèses, la pression de la phase vapeur $P_f$ fixe à la fois la température du gaz liquéfié $T_{l,f}$ et la température de sa vapeur $T_{v,f}$ au sein de la cuve, lesquelles sont égales. La composition du gaz liquéfié $x_{l,f}$ et la composition de sa vapeur $x_{v,i}$ sont déterminées à partir d'une équation d'état. Dans un mode de réalisation préférée, cette équation d'état est l'équation d'état cubique à trois paramètres dérivée de l'équation Redlich-Kwong-Peng-Robinson développée par Martin Cismondi et Jorgen Mollerup (in « Development and application of a three-parameter RK-PR équation of state », Fluid Phase Equilibria, 232, 2005, pp. 74-89). Pour la phase liquide et la phase vapeur, les données calculées 92, à savoir les masses volumiques $p_{l,f}$ et $\rho_{v,f}$, les énergies internes massiques $U_{l,f}$ et $U_{v,f}$, et les enthalpies massiques $H_{l,f}$ et $H_{v,f}$, sont déterminées à partir de la donnée d'entrée 91 spécifiée par l'opérateur.

Au cours de l'évolution du mélange biphasique entre l'état initial 8 et l'état final 9, le débit de soutirage de liquide $\dot{m}_l$, le débit de soutirage de vapeur $\dot{m}_v$, et la puissance apportée par les infiltrations de chaleur à travers les parois d'une cuve $\dot{Q}$ sont supposés constants. Les débits de soutirage de liquide et de vapeur peuvent être mesurés par des capteurs de débit ou spécifiés par l'opérateur. La puissance $\dot{Q}$ est déterminée à partir du taux d'évaporation (« Boil-Off Rate », abrégé BOR) de la cuve, habituellement donné par le constructeur. Ce paramètre caractérise la résistance thermique de l'isolation de la cuve face aux entrées de chaleur. Dans un mode de réalisation préférée, le BOR est corrigé en tenant compte du niveau de remplissage de la cuve.

La résolution du système des équations de conservation de la masse et de l'énergie entre l'état initial 8 et l'état final 9 permet de calculer directement la valeur du paramètre de transition recherché.

Selon un mode de réalisation, à des débits de soutirage de vapeur $\dot{m}_v$ et de liquide $\dot{m}_l$ fixés, l'opérateur spécifie une pression finale $P_f$ supérieure à la pression initiale $P_i$ pour calculer un temps de montée en pression $\tau$ au sein d'une cuve étanche et non réfrigérée 2, 4, 5, 6 ou 7. Par exemple, lorsqu'un méthanier ou un navire propulsé au GNL est amarré dans une zone portuaire où la réglementation impose l'arrêt des moteurs principaux et auxiliaires (le navire étant alors alimenté en électricité depuis la terre), et interdit le brûlage du GNL évaporé ou sa mise à l'évent, l'opérateur a besoin de connaître le temps durant lequel le navire pourra rester à quai en maintenant une pression acceptable pour l'opérabilité de la cuve.

Selon une variante, à des débits de soutirage de vapeur $\dot{m}_v$ et de liquide $\dot{m}_l$ fixés, l'opérateur spécifie une pression finale $P_f$ inférieure à la pression initiale $P_i$ pour calculer un temps de descente en pression $\tau$ au sein d'une cuve étanche et non réfrigérée 2, 4, 5, 6 ou 7. Par exemple, lorsque les moteurs d'un méthanier ou d'un navire propulsé au GNL consomment plus que le débit de gaz naturellement évaporé, l'opérateur a besoin de connaître le temps à sa disposition avant que des soutirages de liquide ne doivent être réalisés pour alimenter les moteurs et maintenir la pression à une valeur acceptable pour l'opérabilité de la cuve.

Selon un autre mode de réalisation, à une durée de transition $\tau$ et un débit de soutirage de liquide $\dot{m}_l$ fixés, l'opérateur spécifie la pression finale $P_f$ pour calculer le débit de soutirage de vapeur $\dot{m}_v$ dans une cuve étanche et non réfrigérée 2, 4, 5, 6 ou 7. Par exemple, lorsque le temps d'escale d'un méthanier ou d'un navire propulsé au GNL est prédéterminé, l'opérateur peut avoir besoin de connaître le débit de soutirage de vapeur qu'il faudrait appliquer pour alimenter les moteurs auxiliaires, qui produisent l'électricité à bord, tout en maintenant la pression à une valeur acceptable pour l'opérabilité de la cuve.

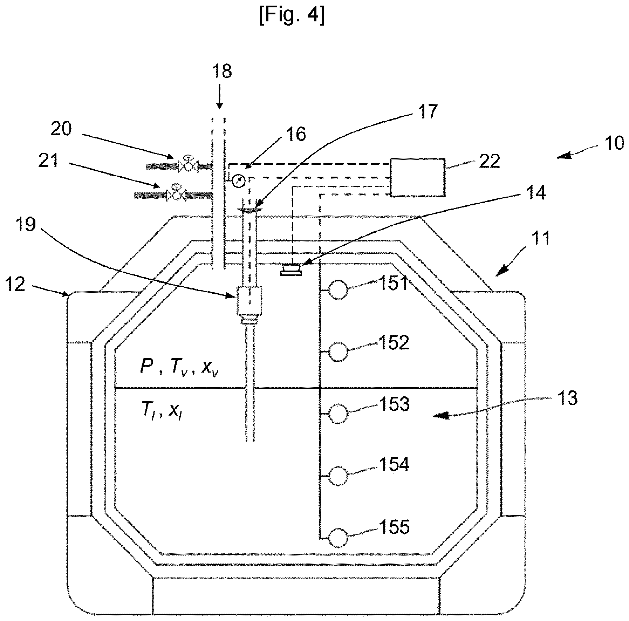

La figure 4 est une vue schématique en coupe d'un système 10 pour calculer un paramètre de transition par le procédé décrit ci-dessus, dans une cuve étanche et non réfrigérée 11 dont les parois sont montées dans une structure porteuse de géométrie polyédrique 12. La cuve étanche et non réfrigérée 11 contient un mélange biphasique de gaz liquéfié et de vapeur 13 à très basse température et comporte : un capteur de niveau 14, des capteurs de température 151 à 155, un capteur de pression 16, un capteur de composition 17, des capteurs de débit des soutirages de vapeur 18, une pompe située en fond de cuve permettant des soutirages de liquide et équipée d'un capteur de débit 19. La cuve étanche et non réfrigérée 11 comporte une soupape de sûreté 20 et une soupape casse-vide 21. Le système 10 comporte un dispositif de calcul 22 connecté par liaison filaire ou sans fil avec les capteurs 14, 151 à 155, 16, 17, 18 et 19 cités ci-dessus pour permettre d'obtenir les mesures des grandeurs physiques nécessaires au calcul du paramètre de transition.

Selon un mode de réalisation, le capteur de niveau 14 permettant de déterminer le volume de gaz liquéfié dans la cuve peut être un capteur à capacitance électrique, un flotteur, un radar ou un laser. Dans un mode de réalisation préférée, les capteurs de température 151 à 155 peuvent aussi remplir cette fonction.

Selon un mode de réalisation, les capteurs de température 151 à 155 sont des sondes de température, en général au nombre de quatre ou de cinq, réparties sur toute la hauteur de la cuve à des altitudes connues. Dans un mode de réalisation préférée, les sondes sont installées de telle sorte qu'au moins une sonde 153, 154 ou 155 est immergée dans le gaz liquéfié, et au moins une sonde 151 ou 152 se situe au niveau de la phase vapeur. La mesure du niveau du gaz liquéfié dans la cuve permet d'identifier les sondes immergées et les sondes situées en phase vapeur en se basant sur l'altitude connue de chaque sonde. Lorsque plusieurs sondes sont immergées dans le gaz liquéfié, les mesures de température sont moyennées pour déterminer la température initiale de la phase liquide $T_{l,i}$. De même, lorsque plusieurs sondes se situent en phase vapeur, les mesures de température sont moyennées pour déterminer la température initiale de la phase vapeur $T_{v,i}$.

Selon un mode de réalisation, le capteur de pression 16 est un manomètre mesurant la pression manométrique de la phase gazeuse dans la cuve. La pression manométrique est ensuite corrigée en tenant compte de la pression atmosphérique pour déterminer la pression initiale du ciel gazeux $P_i$.

Selon un mode de réalisation, le capteur de composition 17 est un chromatographe en phase gazeuse analysant des échantillons de gaz liquéfié réévaporé pour déterminer la composition initiale de la phase liquide $x_{l,i}$.

Selon un mode de réalisation, les capteurs de débit pour mesurer les soutirages de vapeur 18 sont des débitmètres installés à l'entrée des chaudières et des moteurs alimentés en gaz. Le capteur de débit pour mesurer le débit des soutirages de gaz liquéfié 19 est un débitmètre situé en sortie de la pompe. Dans un mode de réalisation préférée, les débitmètres sont des débitmètres massiques à effet Coriolis.

Selon un mode de réalisation, la cuve comporte une soupape de sûreté 20 qui s'ouvre automatiquement à sa pression de tarage. Dans le cas d'une cuve contenant du GNL, la pression de tarage est généralement fixée à 700 mbarg ou à 2 barg. Par exemple, lorsque les moteurs principaux d'un méthanier ou d'un navire propulsé au GNL sont à l'arrêt, que la consommation des moteurs auxiliaires est insuffisante pour compenser le débit de gaz évaporé, et que les conditions réglementaires prohibent que l'excès de gaz soit brûlé ou mis à l'évent, l'opérateur a besoin de connaître le temps de la montée en pression r du ciel gazeux jusqu'à la pression d'ouverture automatique de la soupape. Dans ce cas, l'opérateur spécifie une pression finale de la phase vapeur $P_f$ inférieure ou égale à la pression de tarage de la soupape de sûreté 20 mais supérieure ou égale à la pression initiale de la phase vapeur $P_i$.

Selon un mode de réalisation, la cuve comporte une soupape casse-vide 21 qui s'ouvre automatiquement à sa pression de tarage. Dans le cas d'une cuve contenant du GNL, la pression de tarage de la soupape casse-vide est généralement fixée à 20 mbarg ou 50 mbarg. Par exemple, lorsque les moteurs d'un méthanier ou d'un navire propulsé au GNL consomment plus que le débit de gaz naturellement évaporé, l'opérateur a besoin de connaître le temps de la descente en pression r du ciel gazeux jusqu'à la pression d'ouverture automatique de la soupape casse-vide. Dans ce cas, l'opérateur spécifie une pression finale de la phase vapeur $P_f$ supérieure ou égale à la pression de tarage de la soupape casse-vide 21 mais inférieure ou égale à la pression initiale de la phase vapeur $P_i$.

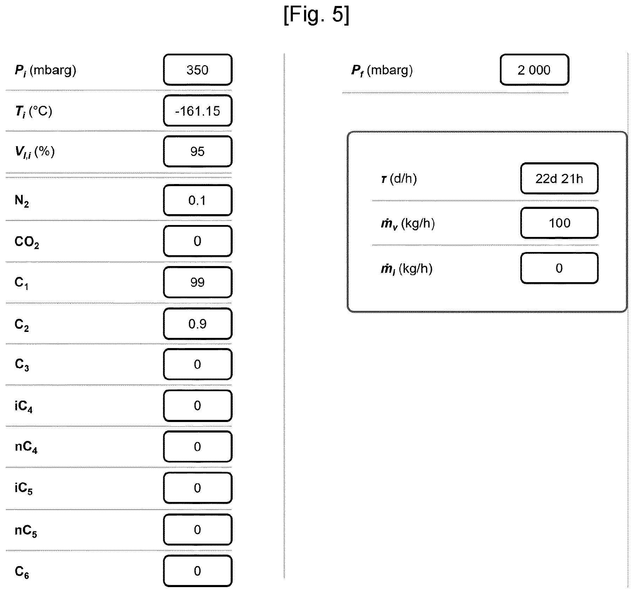

La figure 5 schématise l'interface communiquant à l'opérateur les données d'entrées spécifiques au système de stockage de gaz (pression, température, volume et composition) et le paramètre de transition calculé. Dans cet exemple, le gaz liquéfié est du GNL refroidi à une température de - 161,15 C. Le volume initial de gaz liquéfié contenu dans la cuve $V_{l,i}$ est exprimé en pourcentage d'un taux de remplissage.

Selon un mode de réalisation, l'opérateur spécifie la pression finale $P_f$ et les données d'entrées spécifiques au mélange biphasique 13 sont des grandeurs physiques mesurées par un ou plusieurs capteurs, de niveau 14, de température 151 à 155, de pression 16, de composition 17 et de débit 18 et 19. Les grandeurs physiques mesurées sont communiquées à l'opérateur via une interface homme-machine interagissant avec le dispositif de calcul 22.

En variante, l'opérateur spécifie la pression finale $P_f$ et tout ou partie des données d'entrées spécifiques au mélange biphasique 13, lesquelles sont connues (par exemple la composition initiale de la phase liquide $x_{l,i}$ au moment du chargement du gaz liquéfié indiquée dans le certificat de qualité et le connaissement) ou ont été précalculées (par exemple la composition initiale de la phase liquide $x_{l,i}$ déterminée à partir d'un modèle de vieillissement du gaz liquéfié).

Certains des éléments représentés, notamment le dispositif de calcul 22, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication. 1

## Revendications

1. Procédé mis en oeuvre par ordinateur pour calculer un paramètre de transition d'un moyen de stockage pour un gaz liquéfié, le moyen de stockage comportant au moins une cuve étanche et non réfrigérée (2, 4, 5, 6, 7 ou 11) équipée d'une soupape de sûreté (20), le paramètre de transition caractérisant une évolution d'un mélange biphasique (13) contenu dans la cuve étanche et non réfrigérée entre un état initial (8) et un état final (9), le mélange biphasique incluant une phase liquide et une phase vapeur, ledit paramètre de transition étant choisi dans une liste consistant en une durée de la transition $\tau$, un débit de soutirage de liquide $\dot{m}_l$ et un débit de soutirage vapeur $\dot{m}_v$, le procédé comportant les étapes consistant à :

    - déterminer, pour la phase liquide et la phase vapeur dans l'état initial (8), des masses volumiques initiales $\rho_{l,i}$ et $\rho_{v,i}$, et des énergies internes massiques initiales $U_{l,i}$ et $U_{v,i}$ à partir d'une température initiale de la phase liquide $T_{l,i}$, d'une température initiale de la phase vapeur $T_{v,i}$, d'une pression initiale de la phase vapeur $P_i$, d'un volume initial de la phase liquide $V_{l,i}$ et d'une composition initiale de la phase liquide $x_{l,i}$,

    - déterminer, pour la phase liquide et la phase vapeur dans l'état final (9), des masses volumiques finales $\rho_{l,f}$ et $\rho_{v,f}$, des énergies internes massiques finales $U_{l,f}$ et $U_{v,f}$, et des enthalpies massiques finales $H_{l,f}$ et $H_{l,f}$ à partir d'une équation d'état et d'une pression finale de la phase vapeur $P_f$, la pression finale de la phase vapeur $P_f$ étant inférieure ou égale à la pression de tarage de la soupape de sûreté (20) et supérieure ou égale à la pression initiale de la phase vapeur $P_i$ ;

- calculer le paramètre de transition à l'aide de l'équation

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

dans laquelle $\dot{Q}$ correspond à une énergie apportée par les infiltrations de chaleur à travers les parois d'une cuve par unité de temps, $V_t$ correspond à un volume total de la cuve et avec

$$\overline{U} = \frac{\rho_{l,f}U_{l,f} - \rho_{v,f}U_{v,f}}{\rho_{l,f} - \rho_{v,f}}.$$

2. Procédé mis en oeuvre par ordinateur pour calculer un paramètre de transition d'un moyen de stockage pour un gaz liquéfié, le moyen de stockage comportant au moins une cuve étanche et non réfrigérée (2, 4, 5, 6, 7 ou 11) équipée d'une soupape casse-vide (21), le paramètre de transition caractérisant une évolution d'un mélange biphasique (13) contenu dans la cuve étanche et non réfrigérée entre un état initial (8) et un état final (9), le mélange biphasique incluant une phase liquide et une phase vapeur, ledit paramètre de transition pouvant être une durée de la transition $\tau$, un débit de soutirage de liquide $\dot{m}_l$ ou un débit de soutirage vapeur $\dot{m}_v$, le procédé comportant les étapes consistant à :

   - déterminer, pour la phase liquide et la phase vapeur dans l'état initial (8), des masses volumiques initiales $\rho_{l,i}$ et $\rho_{v,i}$, et des énergies internes massiques initiales $U_{l,i}$ et $U_{v,i}$ à partir d'une température initiale de la phase liquide $T_{l,i}$ d'une température initiale de la phase vapeur $T_{v,i}$, d'une pression initiale de la phase vapeur $P_i$, d'un volume initial de la phase liquide $V_{l,i}$ et d'une composition initiale de la phase liquide $x_{l,i}$,
   - déterminer, pour la phase liquide et la phase vapeur dans l'état final (9), des masses volumiques finales $\rho_{l,f}$ et $\rho_{v,f}$, des énergies internes massiques finales $U_{l,f}$ et $U_{v,f}$, et des enthalpies massiques finales $H_{l,f}$ et $H_{v,f}$ à partir d'une équation d'état et d'une pression finale de la phase vapeur $P_f$, la pression finale de la phase vapeur $P_f$ étant supérieure ou égale à la pression de tarage de la soupape casse-vide (21) et inférieure ou égale à la pression initiale de la phase vapeur $P_i$.
   - calculer le paramètre de transition à l'aide de l'équation

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

dans laquelle $\dot{Q}$ correspond à une énergie apportée par les infiltrations de chaleur à travers les parois d'une cuve par unité de temps, $V_t$ correspond à un volume total de la cuve et avec

$$\overline{U} = \frac{\rho_{l,f}U_{l,f} - \rho_{v,f}U_{v,f}}{\rho_{l,f} - \rho_{v,f}}.$$

3. Procédé selon la revendication 1 ou 2, dans lequel le moyen de stockage comporte une pluralité de cuves (2, 4, 5, 6, 7 et 11), et pour la phase liquide et la phase vapeur les masses volumiques initiales et finales, les énergies internes massiques initiales et finales et les enthalpies massiques finales sont déterminées pour chaque cuve, et dans lequel le paramètre de transition est calculé à l'aide de l'équation

$$\tau\left(\dot{Q}_j + \sum \dot{m}_{v,j}\left(H_{v,f,j} - \overline{U}_j\right) + \sum \dot{m}_{l,j}\left(H_{l,f,j} - \overline{U}_j\right)\right)$$
$$= \sum \rho_{l,i,j}V_{l,i,j}\left(\overline{U}_j - U_{l,i,j}\right) + \sum \rho_{v,i,j}\left(V_{t,j} - V_{l,i,j}\right)\left(\overline{U}_j - U_{v,i,j}\right)$$
$$+ \sum \rho_{v,f,j}V_{t,j}\left(U_{v,f,j} - \overline{U}_j\right)$$

où l'exposant $j$ renvoie à l'index de la cuve considérée.

4. Procédé selon l'une des revendications 1 à 3, dans lequel le paramètre de transition est la durée de transition $\tau$, et dans lequel le débit de soutirage de vapeur $\dot{m}_v$ et le débit de soutirage de liquide $\dot{m}_l$ sont prédéterminés.

5. Procédé selon l'une des revendications 1 à 3, dans lequel le paramètre de transition est le débit de soutirage de vapeur $\dot{m}_v$, et dans lequel le débit de soutirage de liquide $\dot{m}_l$ et la durée de la transition sont prédéterminés.

6. Procédé selon l'une des revendications 1 à 3, dans lequel le paramètre de transition est le débit de soutirage de liquide $\dot{m}_l$, et dans lequel le débit de soutirage de vapeur $\dot{m}_v$ et la durée de la transition sont prédéterminés.

7. Procédé selon l'une quelconque des revendications 1 à 6, dans lequel le moyen de stockage comporte au moins un capteur de niveau (14) configuré pour déterminer le volume de la phase liquide dans au moins une cuve étanche et non réfrigérée (2, 4, 5, 6, 7 ou 11), et le volume initial de la phase liquide $V_{l,i}$ est déterminé par le capteur de niveau 14.

8. Procédé selon l'une quelconque des revendications 1 à 7, dans lequel le moyen de stockage comporte au moins un capteur de température (151 ou 152) configuré pour mesurer la température de la phase vapeur et au moins un capteur de température (153, 154 ou 155) configuré pour mesurer la température de la phase liquide dans au moins une cuve étanche et non réfrigérée (2, 4, 5, 6, 7 ou 11), et la température initiale de la phase vapeur $T_{v,i}$ et la température initiale de la phase liquide $T_{l,i}$ sont mesurées par les capteurs de température (151 à 155).

9. Procédé selon l'une quelconque des revendications 1 à 8, dans lequel le moyen de stockage comporte au moins un capteur de pression (16) configuré pour mesurer la pression de la phase vapeur dans au moins une cuve étanche et non réfrigérée (2, 4, 5, 6, 7 ou 11), et la pression initiale de la phase vapeur $P_i$ est mesurée par le capteur de pression (16).

10. Procédé selon l'une quelconque des revendications 1 à 9, dans lequel le moyen de stockage comporte au moins un capteur de composition (17) configuré pour déterminer la composition de la phase liquide dans au moins une cuve étanche et non réfrigérée (2, 4, 5, 6, 7 ou 11), et dans lequel la composition initiale de la phase liquide $x_{l,i}$ est déterminée par le capteur de composition.

11. Procédé selon l'une quelconque des revendications 1 à 10, dans lequel le moyen de stockage comporte au moins un capteur de débit configuré pour mesurer un débit massique de soutirage de vapeur (18) ou de liquide (19) au sortir d'une cuve étanche et non réfrigérée (2, 4, 5, 6, 7 ou 11), et dans lequel le débit massique de soutirage de liquide $\dot{m}_l$ ou le débit massique de soutirage de vapeur $\dot{m}_v$ est déterminé par le capteur de débit (18 ou 19).

12. Procédé selon l'une quelconque des revendications 1 à 11, dans lequel le mélange biphasique (13) est un mélange combustible.

13. Procédé selon la revendication 12, dans lequel le mélange combustible est choisi dans une liste consistant en le gaz naturel liquéfié, le gaz de pétrole liquéfié et le dihydrogène liquéfié.

14. Procédé selon la revendication 12 ou 13, dans lequel la cuve étanche et non réfrigérée est un réservoir de carburant pour la propulsion d'un véhicule terrestre, maritime, aérien ou spatial.

15. Système (10) pour calculer un paramètre de transition d'un moyen de stockage pour un gaz liquéfié caractérisant une évolution d'un mélange biphasique (13) entre un état initial (8) et un état final (9), le paramètre de transition pouvant être une durée de la transition $\tau$, un débit de soutirage de liquide $\dot{m}_l$ ou un débit de soutirage vapeur $\dot{m}_v$, le système comportant :

   - un moyen de stockage comportant au moins une cuve étanche et non réfrigérée (2, 4, 5, 6, 7 ou 11) contenant le mélange biphasique, ledit mélange biphasique incluant une phase liquide et une phase vapeur,
   - un dispositif de calcul (22) configuré pour mettre en oeuvre le procédé selon l'une quelconque des revendications 1 à 14,
   - une interface homme-machine interagissant avec le dispositif de calcul pour communiquer à un opérateur le paramètre de transition calculé.

16. Véhicule terrestre, maritime, aérien ou spatial comportant un réservoir de carburant pour la propulsion du véhicule et un système selon la revendication 15 configuré pour calculer un paramètre de transition du réservoir de carburant.

17. Un support lisible par ordinateur non transitoire comportant des instructions de programme qui, lorsqu'elles sont exécutées par un appareil, amènent l'appareil à mettre en oeuvre le procédé selon l'une quelconque des revendications 1 à 14.

**Patentansprüche**

1. Computerimplementiertes Verfahren zur Berechnung eines Übergangsparameters eines Speichermittels für ein Flüssiggas, wobei das Speichermittel mindestens einen versiegelten und nicht gekühlten Tank (2, 4, 5, 6, 7 oder 11) umfasst, der mit einem Sicherheitsventil ausgestattet ist ( 20), wobei der Übergangsparameter eine Entwicklung eines im versiegelten und ungekühlten Tank enthaltenen Zweiphasengemisches (13) zwischen einem Anfangszustand (8) und einem Endzustand (9) charakterisiert, wobei das Zweiphasengemisch eine flüssige Phase und eine Dampfphase umfasst, wobei der Übergangsparameter aus einer Liste ausgewählt wird, die aus einer Dauer des Übergangs $T$, einer Flüssigkeitsentnahmerate $\dot{m}_l$ und einer Dampfentnahmerate $\dot{m}_v$ besteht, wobei das Verfahren die folgenden Schritte umfasst:

- Bestimmen, für die flüssige Phase und die Dampfphase im Anfangszustand (8), der Anfangsdichten $\rho_{l,i}$ und $\rho_{v,i}$ sowie der anfänglichen inneren Massenenergien $U_{l,i}$ und $U_{v,i}$ aus einer Anfangstemperatur der flüssigen Phase $T_{l,i}$, einer Anfangstemperatur der Dampfphase $T_{v,i}$, einem Anfangsdruck der Dampfphase $P_i$, einem Anfangsvolumen der Flüssigphase $V_{l,i}$ und einer Anfangszusammensetzung der Flüssigphase $x_{l,j}$,
- Bestimmen, für die flüssige Phase und die Dampfphase im Endzustand (9), der Enddichten $\rho_{l,f}$ und $\rho_{v,j}$, der endgültigen inneren Massenenergien $U_{l,f}$ und $U_{v,f}$ und der endgültigen Masseenthalpien $H_{l,f}$ und $H_{v,f}$ aus einer Zustandsgleichung und einem Enddruck der Dampfphase $P_f$, wobei der Enddruck der Dampfphase $P_f$ kleiner oder gleich dem Tarierdruck des Sicherheitsventils (20) und größer oder gleich dem Anfangsdruck der Dampfphase $P_i$ ist;
- Berechnen des Übergangsparameters mit der Gleichung

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

wobei $\dot{Q}$ einer Energie entspricht, die durch Wärmeinfiltrationen durch die Wände eines Behälters pro Zeiteinheit eingebracht wird, wobei $V_t$ einem Gesamtvolumen des Tanks entspricht mit

$$\overline{U} = \frac{\rho_{l,f}U_{l,f} - \rho_{v,f}U_{v,f}}{\rho_{l,f} - \rho_{v,f}}.$$

2. Computerimplementiertes Verfahren zur Berechnung eines Übergangsparameters eines Speichermittels für ein Flüssiggas, wobei das Speichermittel mindestens einen versiegelten und nicht gekühlten Tank (2, 4, 5, 6, 7 oder 11) umfasst, der mit einem Vakuumbrecherventil ausgestattet ist (21), wobei der Übergangsparameter eine Entwicklung eines im versiegelten und ungekühlten Tank enthaltenen Zweiphasengemisches (13) zwischen einem Anfangszustand (8) und einem Endzustand (9) charakterisiert, wobei das Zweiphasengemisch eine flüssige Phase und eine Dampfphase umfasst, wobei der Übergangsparameter eine Dauer des Übergangs $\tau$, eine Flüssigkeitsentnahmerate $\dot{m}_l$ oder eine Dampfentnahmerate $\dot{m}_v$ sein kann, wobei das Verfahren die folgenden Schritte umfasst:

- Bestimmen, für die flüssige Phase und die Dampfphase im Anfangszustand (8), der Anfangsdichten $\rho_{l,i}$ und $\rho_{v,i}$ sowie der anfänglichen inneren Massenenergien $U_{l,i}$ und $U_{v,i}$ aus einer Anfangstemperatur der flüssigen Phase $T_{l,i}$, einer Anfangstemperatur der Dampfphase $T_{v,i}$, einem Anfangsdruck der Dampfphase $P_i$, einem Anfangsvolumen der Flüssigphase $V_{l,i}$ und einer Anfangszusammensetzung der Flüssigphase $x_{l,i}$,
- Bestimmen, für die flüssige Phase und die Dampfphase im Endzustand (9), der Enddichten $\rho_{l,f}$ und $\rho_{v,f}$, der endgültigen inneren Massenenergien $U_{l,f}$ und $U_{v,f}$ und der endgültigen Masseenthalpien $H_{l,f}$ und $H_{v,f}$ aus einer Zustandsgleichung und einem Enddruck der Dampfphase $P_f$, wobei der Enddruck der Dampfphase $P_f$ größer oder gleich dem Tarierdruck des Vakuumbrecherventils (21) und kleiner oder gleich dem Anfangsdruck der Dampfphase $P_i$ ist;
- Berechnen des Übergangsparameter mit der Gleichung

$$\tau\left(\dot{Q} + \dot{m}_v\left(H_{v,f} - \overline{U}\right) + \dot{m}_l\left(H_{l,f} - \overline{U}\right)\right)$$

$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

wobei $\dot{Q}$ einer Energie entspricht, die durch Wärmeinfiltrationen durch die Wände eines Behälters pro Zeiteinheit eingebracht wird, wobei $V_t$ einem Gesamtvolumen des Tanks entspricht mit

$$\overline{U} = \frac{\rho_{l,f}U_{l,f} - \rho_{v,f}U_{v,f}}{\rho_{l,f} - \rho_{v,f}}.$$

3. Verfahren nach Anspruch 1 oder 2, bei dem das Speichermittel mehrere Tanks (2, 4, 5, 6, 7 und 11) umfasst, und wobei für die flüssige Phase und die Dampfphase die Anfangs- und Enddichten, die anfänglichen und endgültige innere Massenenergien und endgültige Massenenthalpien für jeden Tank bestimmt sind, und wobei der Übergangsparameter anhand der der Gleichung berechnet wird

$$\tau\left(\dot{Q}_j + \sum \dot{m}_{v,j}\left(H_{v,f,j} - \overline{U}_j\right) + \sum \dot{m}_{l,j}\left(H_{l,f,j} - \overline{U}_j\right)\right)$$

$$= \sum \rho_{l,i,j}V_{l,i,j}\left(\overline{U}_j - U_{l,i,j}\right) + \sum \rho_{v,i,j}\left(V_{t,j} - V_{l,i,j}\right)\left(\overline{U}_j - U_{v,i,j}\right)$$

$$+ \sum \rho_{v,f,j}V_{t,j}\left(U_{v,f,j} - \overline{U}_j\right)$$

und wobei der Exponent $j$ sich auf den Index des berücksichtigten Tanks bezieht.

4. Verfahren nach einem der Ansprüche 1 bis 3, bei dem der Übergangsparameter die Übergangsdauer $T$ ist und bei dem die Dampfentnahmerate $\dot{m}_v$ und die Flüssigkeitsentnahmerate $\dot{m}_l$ vorgegeben werden.

5. Verfahren nach einem der Ansprüche 1 bis 3, wobei der Übergangsparameter die Dampfentnahmerate $\dot{m}_v$ ist und wobei die Flüssigkeitsentnahmerate $ml$ und die Dauer des Übergangs vorgegeben werden.

6. Verfahren nach einem der Ansprüche 1 bis 3, wobei der Übergangsparameter die Flüssigkeitsentnahmerate $\dot{m}_l$ ist und wobei die Dampfentnahmerate $\dot{m}_v$ und die Dauer des Übergangs vorgegeben werden.

7. Verfahren nach einem der Ansprüche 1 bis 6, wobei das Speichermittel mindestens einen Füllstandsensor (14) umfasst, der so konfiguriert ist, dass er das Volumen der flüssigen Phase in mindestens einem versiegelten und nicht gekühlten Tank (2, 4, 5, 6, 7 oder 11) bestimmt, und wobei das Anfangsvolumen der flüssigen Phase $V_{l,i}$ durch den Füllstandsensor 14 ermittelt wird.

8. Verfahren nach einem der Ansprüche 1 bis 7, wobei das Speichermittel mindestens einen Temperatursensor (151 oder 152), der so konfiguriert ist, dass er die Temperatur der Dampfphase misst, und mindestens einen Temperatursensor (153, 154 oder 155), der so konfiguriert ist, dass er die Temperatur der flüssigen Phase in mindestens einem versiegelten und nicht gekühlten Tank (2, 4, 5, 6, 7 oder 11) misst, umfasst, und wobei die Anfangstemperatur der Dampfphase $T_{v,i}$ und die Anfangstemperatur der flüssigen Phase $T_{l,i}$ von den Temperatursensoren (151 bis 155) gemessen werden.

9. Verfahren nach einem der Ansprüche 1 bis 8, wobei das Speichermittel mindestens einen Drucksensor (16) umfasst, der so konfiguriert ist, dass er den Druck der Dampfphase in mindestens einem versiegelten und nicht gekühlten Tank (2, 4, 5, 6, 7 oder 11) misst, und wobei der Anfangsdruck der Dampfphase P; durch den Drucksensor (16) gemessen wird.

**10.** Verfahren nach einem der Ansprüche 1 bis 9, bei dem das Speichermittel mindestens einen Zusammensetzungssensor (17) umfasst, der so konfiguriert ist, dass er die Zusammensetzung der flüssigen Phase in mindestens einem versiegelten und nicht gekühlten Tank (2, 4, 5, 6, 7 oder 11) bestimmt, und wobei die Ausgangszusammensetzung der flüssigen Phase $x_{l,i}$ durch den Zusammensetzungssensor bestimmt wird.

**11.** Verfahren nach einem der Ansprüche 1 bis 10, wobei das Speichermittel mindestens einen Durchflusssensor umfasst, der so konfiguriert ist, dass er eine Massendurchflussrate der Entnahme von Dampf (18) oder Flüssigkeit (19) am Ausgang eines versiegelten und nicht gekühlten Tanks (2, 4, 5, 6, 7 oder 11) misst, und bei dem der Flüssigkeitsentnahmemassenstrom $\dot{m}_l$ oder der Dampfentnahmemassenstrom $\dot{m}_v$ durch den Durchflusssensor (18 oder 19) ermittelt wird.

**12.** Verfahren nach einem der Ansprüche 1 bis 11, wobei das Zweiphasengemisch (13) ein brennbares Gemisch ist.

**13.** Verfahren nach Anspruch 12, wobei die brennbare Mischung aus einer Liste bestehend aus Flüssigerdgas, Flüssiggas und Flüssigdiwasserstoff ausgewählt wird.

**14.** Verfahren nach Anspruch 12 oder 13, bei dem der versiegelte und nicht gekühlte Tank ein Treibstofftank für den Antrieb eines Land-, See-, Luft- oder Raumfahrzeugs ist.

**15.** System (10) zur Berechnung eines Übergangsparameters eines Speichermittels für ein verflüssigtes Gas, das eine Entwicklung eines Zweiphasengemisches (13) zwischen einem Anfangszustand (8) und einem Endzustand (9) charakterisiert, wobei der Übergangsparameter sein kann eine Dauer des Übergangs $\tau$, eine Flüssigkeitsentnahmerate $\dot{m}_l$ oder eine Dampfentnahmerate $\dot{m}_v$, wobei das System Folgendes umfasst:

- ein Lagermittel, das mindestens einen versiegelten und nicht gekühlten Tank (2, 4, 5, 6, 7 oder 11), der das Zweiphasengemisch enthält, umfasst, wobei das Zweiphasengemisch eine flüssige Phase und eine Dampfphase umfasst,
- eine Berechnungseinrichtung (22), die zur Durchführung des Verfahrens nach einem der Ansprüche 1 bis 14 konfiguriert ist,
- eine Mensch-Maschine-Schnittstelle, die mit dem Berechnungsgerät interagiert, um den berechneten Übergangsparameter an einen Bediener zu übermitteln.

**16.** Land-, See-, Luft- oder Raumfahrzeug, umfassend einen Kraftstofftank zum Antrieb des Fahrzeugs und ein System gemäß Anspruch 15, das zum Berechnen eines Übergangsparameters des Kraftstofftanks konfiguriert ist.

**17.** Ein nichtflüchtiges computerlesbares Medium mit Programmanweisungen, die, wenn sie von einem Gerät ausgeführt werden, das Gerät veranlassen, das Verfahren nach einem der Ansprüche 1 bis 14 auszuführen.

**Claims**

**1.** Computer-implemented method for computing a transition parameter of a liquefied gas storage medium, the storage medium comprising at least one sealed and unrefrigerated tank (2, 4, 5, 6, 7 or 11) equipped with a safety valve (20), the transition parameter characterizing an evolution of a two-phase mixture (13) contained in the sealed and unrefrigerated tank between an initial state (8) and a final state (9), the two-phase mixture including a liquid phase and a vapour phase, wherein said transition parameter is selected in a group consisting of a duration of the transition $\tau$, a liquid bleeding rate $\dot{m}_l$ or a vapour bleeding rate $\dot{m}_v$, the method comprising the steps of:

- determining, for the liquid phase and the vapour phase in the initial state (8), initial mass densities $\rho_{l,i}$ and $\rho_{v,i}$, and initial internal mass energies $U_{l,i}$ and $U_{v,i}$ on the basis of an initial liquid phase temperature $T_{l,i}$, an initial vapour phase temperature $T_{v,i}$, an initial vapour phase pressure $P_i$, an initial liquid phase volume $V_{l,i}$ and an initial liquid phase composition $x_{l,i}$;
- determining, for the liquid phase and the vapour phase in the final state (9), final mass densities $\rho_{l,f}$ and $\rho_{v,f}$, final internal mass energies $U_{l,f}$ and $U_{v,f}$, and final mass enthalpies $H_{l,f}$ and $H_{v,f}$ on the basis of an equation of state and a final vapour phase pressure $P_f$, the final pressure of the vapour phase $P_f$ being less than or equal to the setting pressure of the safety valve (20) and greater than or equal to the initial pressure of the vapour phase $P_i$;
- computing the transition parameter using the following equation:

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

in which $\dot{Q}$ corresponds to an energy contribution by heat ingress through the walls of a tank per unit of time, $V_t$ corresponds to a total volume of the tank and with

$$\overline{U} = \frac{\rho_{l,f}U_{l,f} - \rho_{v,f}U_{v,f}}{\rho_{l,f} - \rho_{v,f}}.$$

2. Computer-implemented method for computing a transition parameter of a liquefied gas storage medium, the storage medium comprising at least one sealed and unrefrigerated tank (2, 4, 5, 6, 7 or 11) equipped with a vacuum breaker valve (21), the transition parameter characterizing an evolution of a two-phase mixture (13) contained in the sealed and unrefrigerated tank between an initial state (8) and a final state (9), the two-phase mixture including a liquid phase and a vapour phase, wherein said transition parameter may be a duration of the transition $\tau$, a liquid bleeding rate $\dot{m}_l$ or a vapour bleeding rate $\dot{m}_v$, the method comprising the steps of:

   - determining, for the liquid phase and the vapour phase in the initial state (8), initial mass densities $\rho_{l,i}$ and $\rho_{v,j}$, and initial internal mass energies $U_{l,i}$ and $U_{v,i}$ on the basis of an initial liquid phase temperature $T_{l,i}$, an initial vapour phase temperature $T_{v,i}$, an initial vapour phase pressure $P_i$, an initial liquid phase volume $V_{l,i}$ and an initial liquid phase composition $x_{l,i}$;
   - determining, for the liquid phase and the vapour phase in the final state (9), final mass densities $\rho_{l,f}$ and $\rho_{v,f}$, final internal mass energies $U_{l,f}$ and $U_{v,f}$, and final mass enthalpies $H_{l,f}$ and $H_{v,f}$ on the basis of an equation of state and a final vapour phase pressure $P_f$, the final pressure of the vapour phase $P_f$ is greater than or equal to the setting pressure of the vacuum breaker valve (21) and less than or equal to the initial pressure of the vapour phase $P_i$;
   - computing the transition parameter using the following equation:

$$\tau\left(\dot{Q} + \dot{m}_v\left(H_{v,f} - \overline{U}\right) + \dot{m}_l\left(H_{l,f} - \overline{U}\right)\right)$$
$$= \rho_{l,i}V_{l,i}\left(\overline{U} - U_{l,i}\right) + \rho_{v,i}\left(V_t - V_{l,i}\right)\left(\overline{U} - U_{v,i}\right) + \rho_{v,f}V_t\left(U_{v,f} - \overline{U}\right)$$

in which $\dot{Q}$ corresponds to an energy contribution by heat ingress through the walls of a tank per unit of time, $V_t$ corresponds to a total volume of the tank and with

$$\overline{U} = \frac{\rho_{l,f}U_{l,f} - \rho_{v,f}U_{v,f}}{\rho_{l,f} - \rho_{v,f}}.$$

3. Method according to Claim 1 or 2, wherein the storage medium comprises a plurality of tanks (2, 4, 5, 6, 7 and 11) and, for the liquid phase and the vapour phase, the initial and final mass densities, the initial and final internal mass energies and the final mass enthalpies are determined for each tank, and wherein the transition parameter is computed using the following equation:

$$\tau\left(\dot{Q}_j + \sum \dot{m}_{v,j}\left(H_{v,f,j} - \overline{U}_j\right) + \sum \dot{m}_{l,j}\left(H_{l,f,j} - \overline{U}_j\right)\right)$$

$$= \sum \rho_{l,i,j} V_{l,i,j}\left(\overline{U}_j - U_{l,i,j}\right) + \sum \rho_{v,i,j}\left(V_{t,j} - V_{l,i,j}\right)\left(\overline{U}_j - U_{v,i,j}\right)$$

$$+ \sum \rho_{v,f,j} V_{t,j}\left(U_{v,f,j} - \overline{U}_j\right)$$

where the exponent $j$ refers to the index of the considered tank.

4. Method according to any one of Claims 1 to 3, wherein the transition parameter is the transition duration $r$, and wherein the vapour bleeding rate $\dot{m}_v$ and the liquid bleeding rate $\dot{m}_l$ are predetermined.

5. Method according to any one of Claims 1 to 3, wherein the transition parameter is the vapour bleeding rate $\dot{m}_v$, and wherein the liquid bleeding rate $\dot{m}_l$ and the duration of the transition are predetermined.

6. Method according to any one of Claims 1 to 3, wherein the transition parameter is the liquid bleeding rate $\dot{m}_l$, and wherein the vapour bleeding rate $\dot{m}_v$ and the duration of the transition are predetermined.

7. Method according to any one of Claims 1 to 6, wherein the storage medium comprises at least one level sensor (14) configured to determine the volume of the liquid phase in at least one sealed and unrefrigerated tank (2, 4, 5, 6, 7 or 11), and the initial volume of the liquid phase $V_{l,i}$ is determined by the level sensor 14.

8. Method according to any one of Claims 1 to 7, wherein the storage medium comprises at least one temperature sensor (151 or 152) configured to measure the temperature of the vapour phase and at least one temperature sensor (153, 154 or 155) configured to measure the temperature of the liquid phase in at least one sealed and unrefrigerated tank (2, 4, 5, 6, 7 or 11), and the initial temperature of the vapour phase $T_{v,i}$ and the initial temperature of the liquid phase $T_{l,i}$ are measured by the temperature sensors (151 to 155).

9. Method according to any one of Claims 1 to 8, wherein the storage medium comprises at least one pressure sensor (16) configured to measure the pressure of the vapour phase in at least one sealed and unrefrigerated tank (2, 4, 5, 6, 7 or 11), and the initial pressure of the vapour phase $P_i$ is measured by the pressure sensor (16).

10. Method according to any one of Claims 1 to 9, wherein the storage medium comprises at least one composition sensor (17) configured to determine the composition of the liquid phase in at least one sealed and unrefrigerated tank (2, 4, 5, 6, 7 or 11), and wherein the initial composition of the liquid phase $x_{l,i}$ is determined by the composition sensor.

11. Method according to any one of Claims 1 to 10, wherein the storage medium comprises at least one flow rate sensor configured to measure a vapour bleeding mass flow rate (18) or a liquid bleeding mass flow rate (19) exiting a sealed and unrefrigerated tank (2, 4, 5, 6, 7 or 11), and wherein the liquid bleeding mass flow rate $\dot{m}_l$ or the vapour bleeding mass flow rate $\dot{m}_v$ is determined by the flow rate sensor (18 or 19).

12. Method according to any one of Claims 1 to 11, wherein the two-phase mixture (13) is a combustible mixture.

13. Method according to Claim 12, wherein the combustible mixture is selected from a list consisting of liquefied natural gas, liquefied petroleum gas and liquefied hydrogen.

14. Method according to Claim 12 or 13, wherein the sealed and unrefrigerated tank is a fuel reservoir for propelling a land, marine, air or space vehicle.

15. System (10) for computing a transition parameter of a liquefied gas storage medium characterizing an evolution of a two-phase mixture (13) between an initial state (8) and a final state (9), wherein the transition parameter may be a duration of the transition $\tau$, a liquid bleeding rate $\dot{m}_l$ or a vapour bleeding rate $\dot{m}_v$, the system comprising:

- a storage medium comprising at least one sealed and unrefrigerated tank (2, 4, 5, 6, 7 or 11) containing the two-phase mixture, said two-phase mixture including a liquid phase and a vapour phase;

- a computation device (22) configured to implement the method according to any one of Claims 1 to 14;
- a human-machine interface interacting with the computation device in order to notify an operator of the computed transition parameter.

16. Land, marine, air or space vehicle comprising a fuel reservoir for propelling the vehicle and a system according to Claim 15 configured to compute a transition parameter of the fuel tank.

17. A non-transitory computer readable medium comprising program instructions that, when executed by an apparatus, cause the apparatus to perform the method according to any one of Claims 1 to 14.

[Fig. 1]

[Fig. 2]

## [Fig. 3]

[Fig. 4]

$P$ , $T_v$ , $x_v$

$T_l$ , $x_l$

[Fig. 5]

| $P_i$ (mbarg) | 350 |
| --- | --- |
| $T_i$ (°C) | -161.15 |
| $V_{l,i}$ (%) | 95 |
| $N_2$ | 0.1 |
| $CO_2$ | 0 |
| $C_1$ | 99 |
| $C_2$ | 0.9 |
| $C_3$ | 0 |
| $iC_4$ | 0 |
| $nC_4$ | 0 |
| $iC_5$ | 0 |
| $nC_5$ | 0 |
| $C_6$ | 0 |

| $P_f$ (mbarg) | 2 000 |
| --- | --- |

| $\tau$ (d/h) | 22d 21h |
| --- | --- |
| $\dot{m}_v$ (kg/h) | 100 |
| $\dot{m}_l$ (kg/h) | 0 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3390893 A

**Littérature non-brevet citée dans la description**

- **MARTIN CISMONDI ; JORGEN MOLLERUP.** Development and application of a three-parameter RK-PR équation of state. *Fluid Phase Equilibria,* 2005, vol. 232, 74-89